# EUROPÄISCHE PATENTSCHRIFT

(11) **EP 2 444 282 B1**
(45) Veröffentlichungstag und Bekanntmachung des Hinweises auf die Patenterteilung: **05.12.2012**
(21) Anmeldenummer: 10187091.3
(22) Anmeldetag: 11.10.2010
(51) Int. Cl.: B60Q 1/26, H05B 33/08, B60R 1/12

(54) **Gepulste Indikationseinheit für Fahrzeuge**
Pulsed indication unit for vehicles
Unité d'indication pulsée pour véhicules

(43) Veröffentlichungstag der Anmeldung: 25.04.2012
(73) Patentinhaber: SMR Patents S.à.r.l., 1653 Luxembourg (LU)
(72) Erfinder: Fritz, Daniel, 70186, Stuttgart (DE); Goldschmidt, Sönke, 71384 Weinstadt (DE)
(74) Vertreter: Weber-Bruls, Dorothée

(56) Entgegenhaltungen:
- DE-A1-102007 002 809
- DE-B3- 10 260 796
- US-B1- 6 371 636

## Beschreibung

Die Erfindung betrifft eine Indikationseinheit für Fahrzeuge, die in einem Gehäuse mindestens eine LED und mindestens eine elektrischen Schaltung aufweist. Die Indikationseinheit ist mit einer ersten Steuerung, die im Fahrzeug angeordnete ist, und mit einer LED- Treiberschaltung verbunden. Eine zweite Steuerungsschaltung im oder am Gehäuse der Indikationseinheit angeordnet ist, betreibt die LED mit pulsweitenmodulierten Signalen.

### Stand der Technik

Indikationseinheiten am Fahrzeug werden sowohl im Fahrzeuginnern auf dem Armaturenbrett sowie im oder am Innenspiegels aber auch außerhalb des Fahrzeugs im Blickfeld des Fahrers eingesetzt. Hier ist die Anbauposition eines Außenspiegels oder einer Kamera geeignet. Die bereits vorhanden Spiegel - oder Kameragehäuse können verschieden Indikationseinheit enthalten.

Viele Außenspiegel weisen als typische Indikationseinheit eine Blinkleuchte auf, die sich entlang der in Fahrtrichtung vorderen Seite des Spiegelgehäuses erstreckt. Für neben oder hinter dem Außenspiegel befindliche Verkehrsteilnehmer ist die Blinkleuchte im Allgemeinen nicht oder nur ungenügend erkennbar. Daher werden zusätzliche Maßnahmen getroffen, z.B. Zusatz- LEDs verwenden, die entgegen der Fahrtrichtung abstrahlen und am äußersten Rand des Außenspiegels im Blinker integriert sind.

Nach den ECE Regeln soll ein Zusatzblinklicht im Außenspiegel einen Bereich beginnend bei 5° von der Fahrzeuglängsachse bis zu 60 ° zur Fahrzeuglängsachse in Fahrtgegenrichtung ausleuchten. Die Lichtstärke in diesem gesetzlich vorgeschrieben Bereich ist dabei definiert und muss erreicht werden.

Aus dem Stand der Technik ist einen Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Als Leuchtmittel werden durch die bekannten Vorteile immer mehr LEDs verwendet.

Allerdings ist aus Kostengründen ein einfacher Aufbau und eine Reduktion der verwendeten LEDs notwendig, wobei die Lichtausbeute optimiert werden muss.

Aus der EP 1120312 ist eine Außenspiegel mit Blinker bekannt, der ein Leuchtmodul aufweist, indem einen Vielzahl von LEDs durch Öffnungen eines Reflektors scheinen. Die LED, die sich am äußersten Rand des Außenspiegels befindet hat eine Abstrahlrichtung, die den gesetzlichen Regelungen über die Abstrahlcharakteristik entspricht. Die Strahlformung wird über den Reflektor erzielt. Das gesamte Leuchtmodul wird in das Gehäuse des Außenspiegels verklipst und über eine Steckverbindung elektrisch kontaktiert.

Der breite Einsatz von LEDs als Beleuchtungsmittel im Fahrzeug ist bekannt. LEDs werden in Front- und Heckleuchten eingesetzt. Dabei können die LEDs mit pulsweitenmodulierten Signalen angesteuert werden. Durch diese Ansteuerung wird ein Dimmeffekt erreicht, oder aber die Toleranz der LEDs gegenüber Schwankungen im Bordnetz des Fahrzeugs ausgeglichen. Dabei ist das Tastverhältnis des Signals von Bedeutung. Das Tastverhältnis wird aus der Einschaltzeit und der Periodendauer der Pulse berechnet.

Aus der DE 102007002809 sind Gruppen von LEDs bekannt, die gegeneinander phasenverschoben gepulst angesteuert werden. Der Grund dafür ist die Realisierung eines Dimmeffekts durch ein Tastverhältnis von circa 10%, sowie das Betreiben von einer Vielzahl von LEDs ohne, dass ein Flimmereffekt entsteht.

Die vorliegende Erfindung verwendet eine Pulsweitenmodulation für LEDs, um zum einem die Lebensdauer der LEDs zu erhöhen und zum anderen einen optischen Effekt auszunützen, der als Broca-Sulzer Effekt bekannt ist. Dieser Effekt beschreibt das physiologische Verhalten des menschlichen Auges, das kurze Pulse einer gewissen Dauer heller als Pulse längerer Dauer wahrnimmt. DE10260796 zeigt eine Steuerschaltung für die Signalleuchten eines Fahrzeugs gemäß dem Oberbegriff von Anspruch 1. In dieser Druckschrift wird mit einer Pulsweitenmodulation das Blinken der verschieden Lichtquellen angesteuert. In einem Beispiel wird dabei die Hellphase des Blinkers mit einer weiteren Frequenz überlagert. Damit wird eine Optimierung der optischen Qualität angestrebt.

Ziel der Erfindung ist es eine Indikationseinheit zur realisieren, in der LEDs mit kurzen Strompulsen betrieben werden und der Durchschnittsenergieverbrauch gesenkt werden kann. Dadurch werden die LEDs vor Überhitzung geschützt, aber die gesetzlichen Forderungen der Lichtstärke trotzdem erreicht. In einem weiteren Schritt werden diese Vorteile mit dem Effekt der menschlichen Wahrnehmung kurzer Pulse kombiniert.

Die Aufgabe wird wir dadurch gelöst, indem eine Indikationseinheit für Fahrzeuge gemäß Anspruch 1 realisiert wird.

### Beschreibung der Erfindung

Die Erfindung wird in den Zeichnungen dargestellt und in der nachfolgenden Beschreibung näher erläutert.
Fig. 1 zeigt einen Außenspiegel mit Indikationseinheit
Fig. 2 Beispiele für Indikationseinheiten
Fig.3 zeitlicher Verlauf eines Blinksignals
Fig. 4 Steuerschaltung LEDs
Fig. 5 Steuerschaltungsschema
Fig.6 zeitlicher Verlauf eines Blinksignals mit gepulster LED
Fig. 7 Steuerschaltung für schnelles Pulsen

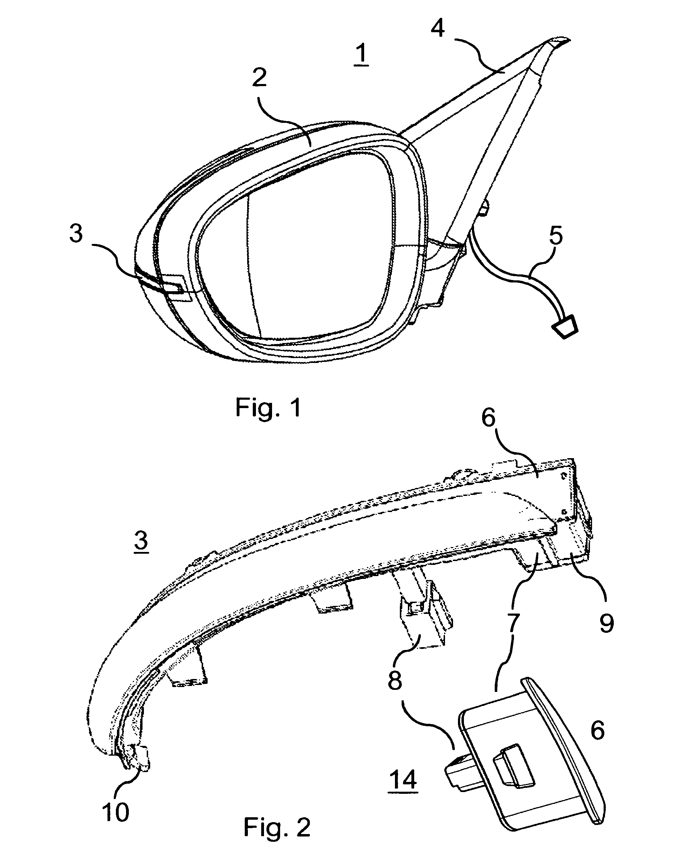

Fig1 zeigt schematisch einen Außenspiegel 1, der in der dargestellten Form einen Spiegelfuß 4 und einen Spiegelkopf 2 aufweist. Mit dem Spiegelfuß 4 wird der Spiegel an einem Fahrzeug befestigt. Der Spiegelkopf 2 bildet einen funktionellen Körper der im Allgemeinen verschwenkbar am Spiegelfuß gelagert ist. Der Spiegelkopf umfasst dabei ein Spiegelglas, einen Spiegelglasantrieb und weitere elektrische Funktionen sowie die erfindungsgemäßen Indikationseinheiten. Unter einer Indikationseinheit wird dabei eine Leuchte verstanden, die aufgrund eines Steuersignals aus dem Fahrzeug oder aus der Erfassungseinheit selbst an- und ausgeschaltet wird und deren Lichtsignal für den Fahrer wahrnehmbar ist.

Es handelt sich dabei beispielsweise um einen Fahrrichtungsanzeiger oder Blinker 3. Im Beispiel der Fig. 1 ist der Blinker 3 an der äußeren Kante des Außenspiegels angebracht und für den Fahrer gerade noch sichtbar. Er kann sich über die Rückseite des Spiegelgehäuses erstrecken. Auch andere Anbringungspositionen für den Blinker sind möglich. Die elektrischen Verbraucher im Außenspiegel werden über eine Kabel 5 mit dem Bordnetz verbunden. Über das Kabel werden die Verbraucher mit Energie versorgt und die Steuersignale zur Ansteuerung beispielsweise der Indikationseinheiten gesendet.

Die Anbringung der Indikationseinheiten im Außenspiegel ist nur eine Möglichkeit. Für zukünftige Anwendungen sind Außenkameras vorgesehen, die an der Stelle des Außenspiegels angebracht werden. Die Kameras weisen kleinere Gehäuse als ein Außenspiegel auf, da sie lediglich Sensoren und elektrische Ansteuerungen beinhalten. Ist ein Kameragehäuse im Blickfeld des Fahrers angebracht ist es sinnvoll, eine Indikationseinheit im Gehäuse unterzubringen.

Ein weiterer Anbringungsort ergibt sich im Innenspiegel des Fahrzeugs. Hier ist eine Indikationseinheit, die vom Fahrzeug gesteuert ist und durch ein Lichtsignal auf sich aufmerksam macht von Nutzen.

Figur 2 zeigt Beispiele für die Indikationseinheit. Als ein Beispiel wird ein Blinker 3 gezeigt. Er ist als selbstständiges Blinkermodul aufgebaut, was aber die Erfindung nicht nur auf abgeschlossenen Module einschränken soll. Auch offenen Blinkereinbauten sind mit umfasst. Der Blinker 3 besteht aus einem Modulgehäuse 7, das von einer Lichtscheibe 6 vollständig verschlossen wird. Das geschlossene Blinkermodul enthält in unterschiedlichen Ausführungsformen eine oder mehrere LEDs als Lichtquellen, die auf einer Leiterplatte 7 montiert und mit LED Treibern verbunden sind. Weiterhin kann das Blinkermodul noch optische Bauteile enthalten, wie Lichtleiter, Lichtstreuscheiben, Fresnellinsen, Reflektoren order Kombinationen all dieser Elemente.

Das Licht dieses Blinkers wird über die Fläche der Lichtscheibe 6 und am Endpunkt der Lichtscheibe 10 ausgekoppelt. Über einen Steckverbinder 18 ist das Modul an das elektrische Netz anschließbar.

Ein weiteres Beispiel einer Indikationseinheit wird mit einer Spurwechselanzeige 14 vorgestellt. Die Spurwechselanzeige 14 weist ebenfalls einen Modulgehäuse 7 und eine Lichtscheibe 6 auf.

Ein solches einfaches Modul kann auch als Umfeldleuchte eingesetzt werden, die einen Bereich neben dem Fahrzeug ausleuchtet oder die Tür des Fahrzeugs beleuchtet.

Alle Indikationseinheiten werden von einer Steuerung angesteuert, die im Fahrzeug selbst angebracht ist. Alternative dazu ist es vorstellbar für eine Warnfunktion die

Indikationsleuchte direkt vom Sensor anzusteuern, ohne über eine zentrale Fahrzeugsteuerung zu gehen.

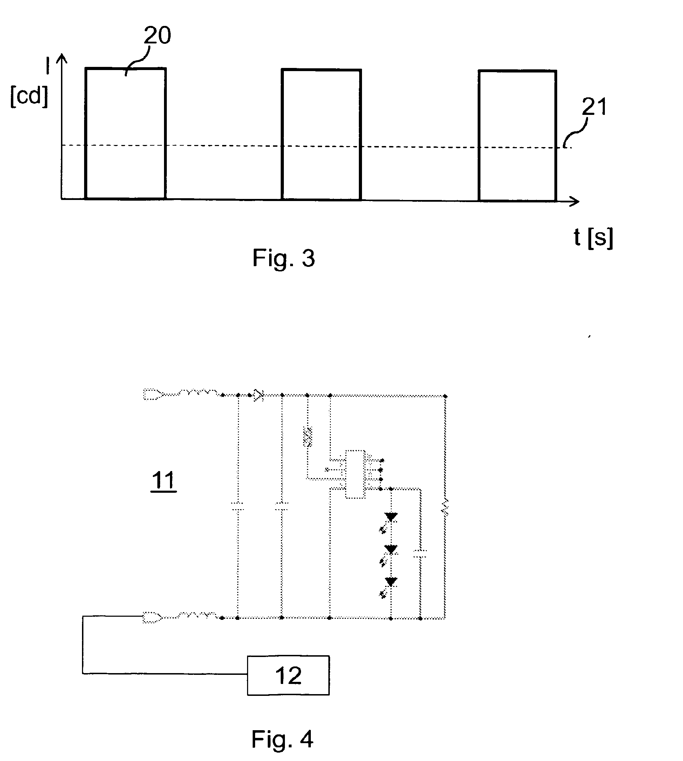

Figur 3 zeigt ein Beispiel für den Verlauf eines Blinkersignals 20, das von der Blinkersteuerung des Fahrzeugs zentral an alle am Fahrzeug angebrachten Blinker gesendet wird. Eine gesetzliche Vorgabe sieht vor, dass alle Blinker einer Seite synchron angesteuert werden, sowie die Blinker beider Fahrzeugseiten für die Warnlichteinrichtung.

Die Blinkerfrequenz beträgt dabei 1,5 Hertz bei einem Tastverhältnis von circa 50%.

Die effektive Lichtstärke I gemessene in Candela wird mit der gestrichelten Linie 21 angedeutet. Die gesetzlichen Vorgaben verlangen beispielsweise eine Lichtstärke von 0,6 cd minimal bis zu 200 cd maximal, die integral gemessen wird.

Eine repräsentative Ansteuerung der LED in einem Blinker wird in Fig 4 ausgeführt. Die LED-Treiber-Schaltung 11 ist mit der fahrzeugseitigen ersten Steuerschaltung 12 im Fahrzeug verbunden. Im gewählten Beispiel werden drei in Reihe geschaltete LEDs angesteuert, wobei hier eine LED Treiberbaustein verwendet wird, der einen konstanten LED Strom garantiert auch wenn fahrzeugseitig die Spannung im Bordnetz schwankt. Der gewünschte Strom für die LEDs kann so auf einfache Art eingestellt werden.

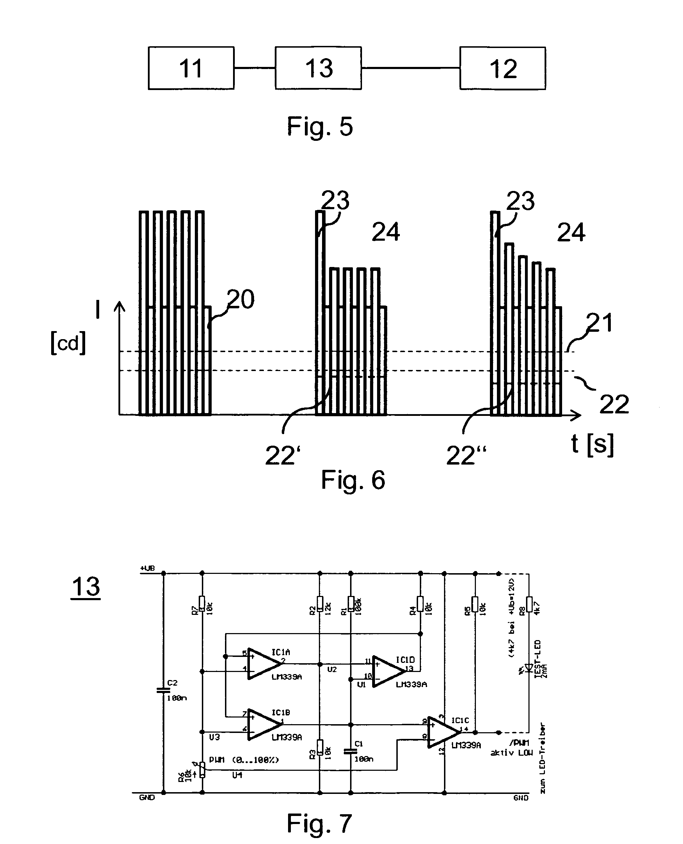

Die erfindungsgemäße Lösung wird in Fig. 5 schematisch dargestellt. Die LED Treiber- Schaltung 11 ist dabei nicht direkt mit der ersten Steuerschaltung 12 im Fahrzeug verbunden, sondern es wird eine Pulsschaltung, eine zweite Steuerschaltung 13 dazwischen geschaltet. Die Schaltungen 11 und 13 können dabei auch in einer Baueinheit realisiert sein. Nur die fahrzeugseitige erste Steuerschaltung 12 ist räumlich getrennt angeordnet und über elektrische Verbindungen, oder ein Bussystem mit den Schaltungen 11 und 13 verbunden.

Figur 6 zeigt die erfindungsgemäße Lösung im zeitlichen Verlauf des Blinkersignals. Dem Blinkersignal aus dem Fahrzeug wird eine weiteres pulsweitenmoduliertes Signal mit kurzen Pulsen überlager. Die Frequenz des Überlagerungssignals wird dabei mit 100 bis 200 Hz so gewählt, dass das menschliche Auge die Pulse nicht auflösen kann, aber noch keine Probleme mit EMV Verträglichkeit entstehen.

Das Tastverhältnis wird so gewählt, dass die mittlere Lichtstärke noch im gesetzlichen Rahmen liegt. Durch den Pulsbetrieb werden die eingesetzten LEDs geschont und ein Überhitzen vermieden. Für das menschliche Auge erscheint das Blinksignal aber weiterhin mit der Frequenz von 1,5 Hz.

Auf dem zweiten Puls in Figur 6 wird eine weitere verbesserte Version des gepulsten Blinkers dargestellt. Dabei wird von dem Phänomen Gebrauch gemacht, dass das menschliche Auge einen kurzen Puls als sehr hell wahrnimmt. Dem wird Rechnung getragen, indem der erste überlagerte kurzer Puls 23 mit einer größeren Lichtstärke als die Folgepulse 24 vorgesehen ist. Durch den Broca Sulzer Effekt wird das Blinkersignal dadurch als sehr hell wahrgenommen während die effektive Lichtstärke 22' gegenüber dem ersten Beispiel abnimmt. Während im Beispiel des zweiten Blinkersignals die Folgepulse 24 dieselbe Lichtstärke aufweisen werden die Folgepulse 23 in Beispiel 3 kontinuierlich in ihrer Lichtstärke reduziert. Die effektive Lichtstärke 22" kann sich dabei noch weiter verringern.

Die Überlagerungspulse werde von der Pulsschaltung , die zweite Steuerschaltung 13 erzeugt und ein Blinkersignal der fahrzeugseitigen ersten Steuerschaltung 12 überlagert. Ein Beispiel einer pulsweitenmodulierten, einer zweiten Steuerschaltung ist in Fig. 7 dargestellt. Es handelt sich hier um eine konventionelle LED Pulsweitenmodulations-Schaltung. Alternative zu einer solchen Schaltung ist der Einsatz von programmierbaren Controllern möglich, die einen Pulsverlauf wie in den Pulsen zwei und drei der Figur 6 dargestellt auf einfache Weise realisieren können.

Diese Schaltung nach Fig. 7 verwendet folgend Aufbau um einen Exponential-Sägezahn-Oszillator zu realisieren: Ein RC-Glied R1/C1 wird über eine Versorgungsspannung +UB exponentiell aufgeladen und bei Erreichen einer durch R2/R3 festgelegten Schwelle U2, knapp unter +Ub/2 wird der Kondensator C1 über den Open-Kollektor-Ausgang des Komperators IC1 B wieder entladen.

Gleichzeitig wird die Referenz U2 über den Komperator IC1A während diesem Vorgang auf ca. 0,1V heruntergezogen, so dass U1 zunächst weiterhin oberhalb von U2 bleibt und C1 nahezu vollständig entladen werden kann. Erst wenn U1 unterhalb von U2 , also 0,1V gelangt, schaltet der Komparator IC1 D um und das Aufladen von C1 beginnt von vorn. Die Schaltung funktioniert zuverlässig, ohne dass irgendwelche Trimmpotentiometer nötig wären, solange R2<<R1 ist. Denn dann ist die Sättigungsspannung bei IC1A zum Zeitpunkt des abgeschlossenen Entladevorgangs immer höher als sie Spannung an IC1 B.Um schließlich das gewünschte PWM-Signal zu bekommen, vergleicht man mittels Komparator IC1C die Sägezahnspannung mit einer einstellbaren Referenzspannung U4, die wegen Spannungsteiler R6/R7 > R3/R2 bzw. U3 > U2 auch oberhalb der Sägezahnspitzenspannung U2 liegen kann. Somit erlaubt die Schaltung ein 100% PWM-Tastverhältnis. Auch das andere Extrem von 0% Tastverhältnis , mit Ausgang /PWM immer HIGH bzw. Status immer AUS, wird erreicht: Die restlichen 0,1V als Sättigungsspannung von IC1B beim Entladen von C1 liegen oberhalb der minimalen Spannung von U4=0V .Diese Methode ist sehr einfach, das zeitliche Verhalten, die Frequenz des Oszillators und das PWM-Tastverhältnis ist so gut wie unabhängig von der Versorgungsspannung +Ub. Der Ausgang der Schaltung wird mit der LED Treiber Schaltung 11 verbunden.

Die Schaltungsbeispiele sollen die Erfindung nicht einschränken, jede andere Art der Ansteuerung, die ein Fachmann sich für die Überlagerung von fahrzeugseitigem Signal und gepulsten LED Signal wählen würde ist möglich.

Die erfindungsgemäße Indikationseinheit ist aber nicht auf einen Fahrzeugblinker begrenzt.

Die Indikationseinheit 14 wird beispielsweise als Spurwechselanzeige eingesetzt. Bei einer solchen Warnanzeige wird der Fahrer auf eine gefährliche Situation aufmerksam gemacht und über eine Leuchtanzeige gewarnt. Die Warnung ist als blinkende Anzeige ausgelegt, da ein blinkendes Licht eine höhere Aufmerksamkeit durch den Fahrer erfährt. Nach der Feststellung einer Gefahrensituation wird diese Information im Fahrzeug verarbeitet und von einer dafür vorgesehenen Steuereinheit ein zeitlich getaktetes Steuersignal an die Indikationseinheit gegeben. Diese blinkt ein Warnsignal an den Fahrer, wobei das Tastverhältnis vorzugsweise zwischen 50 und 90 % liegt. Dem fahrzeugseitigen Signal wird das gepulste PWM Signal überlagert.

Ein solches Warnsignal kann im Gehäuse des Außenspiegels oder des Innenspiegels oder der Kamera, hinter dem Spiegelglas des Außenspiegels oder des Innenspiegel angebracht sein.

Ein weiteres Beispiel ist eine Umfeldleuchte, die entsprechend der Erfindung aufgebaut ist. Die Umfeldleuchte ist über eine Steuereinheit des Fahrzeug an- und ausschaltbar. Bei Annäherung an das Fahrzeugs und/oder Betätigung des Öffnungsmechanismus wird die Umfeldleuchte fahrzeugseitig aktiviert. Die gepulste Signale der zweiten Steuerschaltung überlagert das fahrzeugseitige Signal.

Mit der zweiten Steuerschaltung 13 zur PWM des Steuersignals bietet sich zu den bereits geschilderten Vorteilen durch Pulsüberhöhung und Reduktion der Wärmeabfuhr der Vorteil, die LED dimmen zu können. Hier ist durch das Aus-Signal des Fahrzeugs, ein langsames Verglimmen der LEDs einfach zu realisieren.

Die gewählten Pulsweiten und Höhen und das Tastverhältnis müssen an die jeweiligen LEDs angepasst sein. Mit einer Erhöhung des Tastverhältnisses steigt die thermische Leistung der Sperrschicht an und die Lichtleistung sowie die Lichtfarbe der LED wird beeinflusst.

Untersuchungen haben ergeben, dass der Strahlungsfluß (Energiepro Zeiteinheit) nicht von der Frequenz der Pulse abhängt sondern vom Tastverhältnis. Verwendet man also kurze pulse und ein moderates Tastverhältnis wird man thermische Probleme minimieren und gleichzeitig den physiologischen Effekt auf das menschliche Auge ausnutzen.

### Legende:

- 1: Außenspiegel
- 2: Spiegelkopf
- 3: Blinker
- 4: Spiegelfuß
- 5: Kabelbaum
- 6: Lichtscheibe
- 7: Modulgehäuse
- 8: Steckverbinder
- 9: Leiterplatte
- 10: Lichtauskopplung
- 11: LED Treiberschaltung
- 12: Erste Steuerschaltung fahrzeugseitig
- 13: Zweite Steuerschaltung
- 14: Warnanzeige/leuchte
- 20: Lichtstärke des Pulses
- 21: Durchschnitt Lichtstärke I
- 22: Mittlere Lichtstärke gepulst
- 22': Mittlere Lichtstärke mit überhöhten Puls
- 22": Mittlere Lichtstärke mit kontinuierlich absteigende Leistung

## Patentansprüche

1. Indikationseinheit für Fahrzeuge, die mindestens ein Gehäuse für die Aufnahme mindestens einer LED und mindestens einer elektrischen Schaltung aufweist, wobei eine LED-Treiberschaltung (11) der Indikationseinheit (3, 14) mit einer ersten Steuerung (12), die im Fahrzeug angeordnete ist und Ein- und Ausschaltsignale liefert, verbunden ist, **dadurch gekennzeichnet, dass** eine zweite Steuerungsschaltung (13) im oder an der Indikationseinheit (3) angeordnet ist, die die mindestens eine LED mit pulsweitenmodulierten Signalen (23,24) mit einer Frequenz über 100 Hz beaufschlagt, wobei der erste Puls (23) der zweiten Steuerschaltung (13) gegenüber den folgenden Pulsen (24) einer aktiven Phase (20) in der Lichtstärke überhöht ist.

2. Indikationseinheit nach Anspruch 1, **dadurch gekennzeichnet, dass** die Folgepulse (24) dieselbe oder eine abnehmende Lichtstärke (I) haben

3. Indikationseinheit nach Anspruch 1 oder 2, **dadurch gekennzeichnet, dass** die zweiten Steuerschaltung (13) einen programmierbaren Controller enthält.

4. Indikationseinheit nach Anspruch 1, **dadurch gekennzeichnet, dass** die erste Steuerung (12) im Fahrzeug einen Blinkersteuerung ist.

5. Indikationseinheit nach Anspruch 1, **dadurch gekennzeichnet, dass** die erste Steuerung (12) eine Warninformationsanzeige steuert.

6. Indikationseinheit nach Anspruch 1, **dadurch gekennzeichnet, dass** die erste Steuerung (12) eine Umfeldleuchte ansteuert.

7. Indikationseinheit nach Anspruch 1, **dadurch gekennzeichnet, dass** die erste Steuerung pulsweitenmodulierte Signale zwischen 1 und 10 Hz liefert.

8. Indikationseinheit nach Anspruch 1, **dadurch gekennzeichnet, dass** die zweite Steuerschaltung (13) pulsweitenmodulierte Signale bis 500 Hz liefert

9. Indikationseinheit nach Anspruch 1, **dadurch gekennzeichnet, dass** die Indikationsanzeige in einem Außenspiegel angeordnet ist.

10. Indikationseinheit nach Anspruch 1, **dadurch gekennzeichnet, dass** die Indikationsanzeige in einem Innenspiegel angeordnet ist.

11. Indikationseinheit nach Anspruch 1, **dadurch gekennzeichnet, dass** die Indikationsanzeige in einem Kameragehäuse angeordnet ist.

12. Indikationseinheit nach Anspruch 1, **dadurch gekennzeichnet, dass** die Indikationsanzeige eine Lichtscheibe (6) im allgemeinen flächig ausleuchtet.

13. Indikationseinheit nach Anspruch 1, **dadurch gekennzeichnet, dass** die Indikationsanzeige mindestens ein Icon ausleuchtet.

## Claims

1. An indication unit for vehicles, comprising at least one housing for receiving at least one LED and at least one electric circuit, wherein an LED driver circuit (11) of the indication unit (3, 14) is connected with a first control (12) that is disposed in the vehicle and delivers on and off switching signals, **characterized in that** a second control circuit (13), which is disposed in or on the indication unit (3), applies pulse width-modulated signals (23, 24) with a frequency above 100 Hz to the at least one LED, wherein the first pulse (23) of the second control circuit (13) is superelevated in light intensity relative to the following pulses (24) of an active phase (20).

2. An indication unit according to claim 1, **characterized in that** the follow-on pulses (24) have the same or decreasing light intensity.

3. An indication unit according to claim 1 or 2, **characterized in that** the second control circuit (13) comprises a programmable controller.

4. An indication unit according to claim 1, **characterized in that** the first control circuit (12) in the vehicle is a blinker control.

5. An indication unit according to claim 1, **characterized in that** the first control (12) controls a warning information display.

6. An indication unit according to claim 1, **characterized in that** the first control (12) controls an ambient light.

7. An indication unit according to claim 1, **characterized in that** the first control delivers pulse width-modulated signals between 1 and 10 Hz.

8. An indication unit according to claim 1, **characterized in that** the second control circuit (13) delivers pulse width-modulated signals up to 500 Hz.

9. An indication unit according to claim 1, **characterized in that** the indicator display is disposed in an external mirror.

10. An indication unit according to claim 1, **characterized in that** the indication display is disposed in an interior mirror.

11. An indication unit according to claim 1, **characterized in that** the indication display is disposed in a camera housing.

12. An indication unit according to claim 1, **characterized in that** the indication display illuminates a light disc (6) in a general two-dimensional manner.

13. An indication unit according to claim 1, **characterized in that** the indication display illuminates at least one icon.

## Revendications

1. Unité d'indication pour des véhicules, qui comporte au moins un boîtier destiné à recevoir au moins une diode électroluminescente (LED) et au moins un circuit électrique, de telle sorte qu'au moins un circuit d'excitation de LED (11) de l'unité d'indication (3, 14) est relié à une première commande (12), qui est agencée dans le véhicule, et qui délivre des signaux de mise en marche et d'arrêt, **caractérisée en ce qu'**un second circuit de commande (13) est agencé dans ou sur l'unité d'indication (3), qui agit sur la au moins une LED avec des signaux modulés en largeur d'impulsion (23, 24) ayant une fréquence supérieure à 100 Hz, de telle sorte que la première impulsion (23) du second circuit de commande (13) est augmentée en intensité lumineuse par rapport aux impulsions suivantes (24) d'une phase active (20).

2. Unité d'indication selon la revendication 1, **caractérisée en ce que** les séquences d'impulsions (24) ont la même intensité lumineuse (I), ou une intensité lumineuse décroissante.

3. Unité d'indication selon les revendications 1 ou 2, **caractérisée en ce que** le second circuit de commande (13) contient une commande programmable.

4. Unité d'indication selon la revendication 1, **caractérisée en ce que** la première commande (12) dans le véhicule est une commande de clignotants.

5. Unité d'indication selon la revendication 1, **caractérisée en ce que** la première commande (12) commande un affichage d'information d'alerte.

6. Unité d'indication selon la revendication 1, **caractérisée en ce que** la première commande (12) commande un éclairage ambiant.

7. Unité d'indication selon la revendication 1, **caractérisée en ce que** la première commande délivre des signaux modulés en largeur d'impulsion entre 1 et 10 Hz.

8. Unité d'indication selon la revendication 1, **caractérisée en ce que** la seconde commande (13) délivre des signaux modulés en largeur d'impulsion jusqu'à 500 Hz.

9. Unité d'indication selon la revendication 1, **caractérisée en ce que** l'affichage d'indication est agencé dans un rétroviseur extérieur.

10. Unité d'indication selon la revendication 1, **caractérisée en ce que** l'affichage d'indication est agencé dans un rétroviseur intérieur.

11. Unité d'indication selon la revendication 1, **caractérisée en ce que** l'affichage d'indication est agencé dans un boîtier de caméra.

12. Unité d'indication selon la revendication 1, **caractérisée en ce que** l'affichage d'indication éclaire une lentille (6), qui est généralement plate.

13. Unité d'indication selon la revendication 1, **caractérisée en ce que** l'affichage d'indication éclaire au moins une icône.
